# EUROPEAN PATENT APPLICATION

(11) **EP 4 023 389 A2**
(43) Date of publication of application: **06.07.2022**
(21) Application number: 21208116.0
(22) Date of filing: 15.11.2021
(51) Int. Cl.: B23K 26/146, B23K 26/356

(54) **LASER PEENING PROCESSING APPARATUS AND METHOD OF LASER PEENING PROCESSING**

(30) Priority: 14.12.2020 JP 2020207151
(71) Applicant: Subaru Corporation, Tokyo 150-8554 (JP)
(72) Inventor: OGUMA, Yoshitomo, Tokyo (JP); HIRAYAMA, Takaaki, Tokyo (JP)
(74) Representative: Vossius & Partner Patentanwälte Rechtsanwälte mbB

(57) **Abstract**

According to one embodiment, a laser peening processing apparatus includes a laser oscillator, a condensing lens, an optical element, a liquid tank and a beam expander. The laser oscillator oscillates laser light. The condensing lens condenses the laser light on a surface of an object. The optical element changes a travelling direction of the laser light. The liquid tank inputs the laser light into liquid, and emits and ejects the laser light and the liquid from an exit to the surface. The beam expander adjusts a magnifying ratio of a beam diameter of the laser light entering into the condensing lens. By adjusting the magnifying ratio, a beam diameter of the laser light irradiating the surface becomes a diameter required for laser peening processing of the surface. The adjusting the magnifying ratio also prevents the laser light, having an excess beam diameter, from entering into the optical element.

## Description

### FIELD

Embodiments described herein relate generally to a laser peening processing apparatus and a method of laser peening processing.

### BACKGROUND

Conventionally, laser peening processing is known as a method of giving the residual stress to a surface of an object to modify the surface. Laser peening processing is performed by condensing a laser beam and irradiating a surface to be processed of an object with the condensed laser beam in the state where the surface to be processed has been covered with liquid. When a surface to be processed of an object covered with liquid is irradiated with a condensed laser beam, plasma generated by the irradiation with the laser beam can be closed in the liquid. As a result, the pressure of a shock wave is given to the surface to be processed. Thereby, compressive stress can be made to remain inside the surface of the object by plastic deformation of the surface of the object (for example, refer to Japanese Patent Application Publication JP 2018-039015A).

Moreover, a laser peening processing apparatus having a nozzle which can eject a laser beam together with liquid with changing a travelling direction of the laser beam by an optical element, such as a prism, has been also proposed so that a narrow part of an object having such a complicated form that the irradiation distance of the laser beam is restricted can be locally processed by laser peening (for example, refer to Japanese Patent Application Publication JP 2017-177162A, the international publication WO 2018/135082 pamphlet, and Japanese Patent Application Publication JP 2020-028885A).

However, when a prism is disposed in the latter part of a condensing lens for condensing a laser beam, the prism is damaged by laser peening processing for a long time. As a concrete example, laser peening processing of a typical aircraft part takes 16 hours to 70 hours. On the other hand, when a prism disposed at the latter part of a condensing lens is irradiated with a laser beam continuously over 12 hours, fine flaws may be occurred on the prism due to ionization of electrons emitted from the surface of the prism.

Accordingly, an object of the present invention is to make it possible to continue laser peening processing for a longer time without damage to an optical element for changing a travelling direction of a laser beam, disposed posterior to a condensing lens for condensing the laser beam.

### SUMMARY OF THE INVENTION

In general, according to one embodiment, a laser peening processing apparatus includes a laser oscillator, a condensing lens, an optical element, a liquid tank, and a beam expander. The laser oscillator oscillates laser light. The condensing lens condenses the laser light on a surface to be processed of an object. The optical element changes a travelling direction of the laser light emitted from the condensing lens. The liquid tank inputs the laser light, of which the travelling direction has been changed by the optical element, into liquid. The liquid tank emits and ejects the input laser light and the liquid from an exit to the surface to be processed. The beam expander adjusts a magnifying ratio of a beam diameter of the laser light entering into the condensing lens. The adjusting the magnifying ratio makes a beam diameter of the laser light irradiating the surface to be processed become a diameter required for laser peening processing of the surface to be processed. The adjusting the magnifying ratio also prevents the laser light, having an excess beam diameter causing damage of the optical element, from entering into the optical element.

Further, according to one embodiment, a laser peening processing apparatus includes a laser oscillator, a condensing lens, an optical element, and a liquid tank. The laser oscillator oscillates laser light. The condensing lens condenses the laser light on a surface to be processed of an object. The optical element changes a travelling direction of the laser light emitted from the condensing lens. The liquid tank inputs the laser light, of which the travelling direction has been changed by the optical element, into liquid. The liquid tank emits and ejects the input laser light and the liquid from an exit to the surface to be processed. A total reflection mirror is disposed as the optical element. The liquid tank has an incident window plate for entering the laser light into the liquid tank while sealing the liquid tank. Each of an incident face and an emission face of the incident window plate is coated with antireflection film.

Further, according to one embodiment, a method of laser peening processing includes producing a product or a semi-product by the laser peening processing of the object using the above-mentioned laser peening processing apparatus.

Further, according to one embodiment, a method of laser peening processing includes producing a product or a semi-product by the laser peening processing of an object using a laser peening processing apparatus. The laser peening processing apparatus includes a laser oscillator, a condensing lens, an optical element, and a liquid tank. The laser oscillator oscillates laser light. The condensing lens condenses the laser light on a surface to be processed of the object. The optical element changes a travelling direction of the laser light emitted from the condensing lens. The liquid tank inputs the laser light, of which the travelling direction has been changed by the optical element, into liquid. The liquid tank emits and ejects the input laser light and the liquid from an exit to the surface to be processed. A magnifying ratio of a beam diameter of the laser light entering into the condensing lens is adjusted by a beam expander. The adjusting the magnifying ratio making a beam diameter of the laser light irradiating the surface to be processed become a diameter required for laser peening processing of the surface to be processed. The adjusting the magnifying ratio also preventing the laser light, having an excess beam diameter causing damage of the optical element, from entering into the optical element.

### BRIEF DESCRIPTION OF THE DRAWINGS

In the accompanying drawings:
FIG. 1 is a front view of a laser peening processing apparatus according to the first embodiment of the present invention;
FIG. 2 is a top view of the laser peening processing apparatus shown in FIG. 1;
FIG. 3 is a partial sectional view showing an example of detailed disposition and composition of a beam expander and a nozzle included in the laser peening processing apparatus shown in FIGs. 1 and 2; and
FIG. 4 is a partial sectional view showing an example of detailed disposition and composition of a beam expander and a nozzle included in a laser peening processing apparatus according to the second embodiment of the present invention.

### DETAILED DESCRIPTION

A laser peening processing apparatus and a method of laser peening processing according to embodiments of the present invention will be described with reference to accompanying drawings.

### (First Embodiment)

### (Structure and Function)

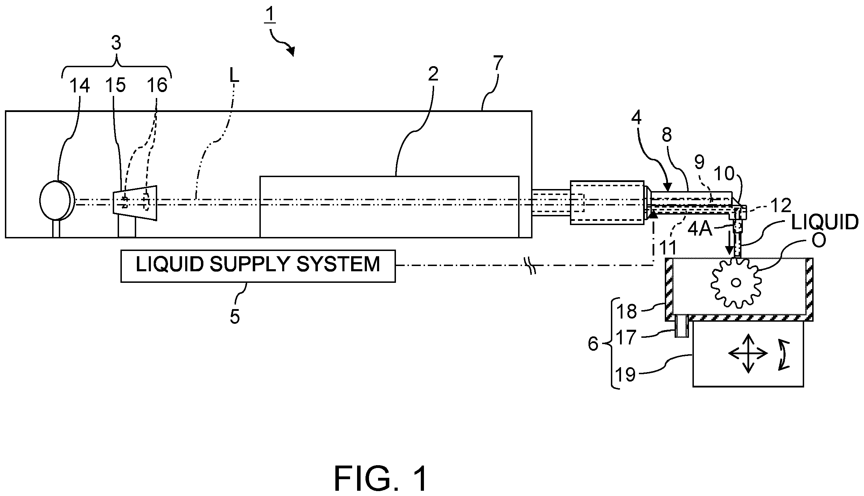

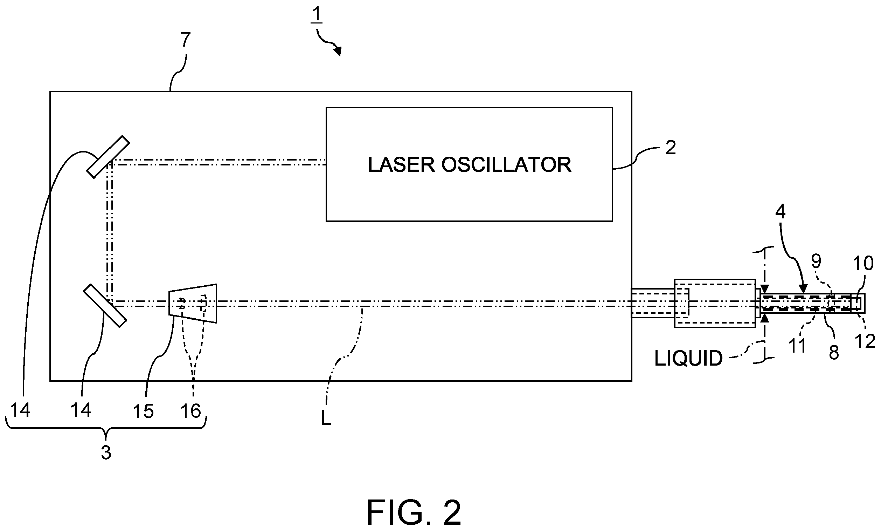

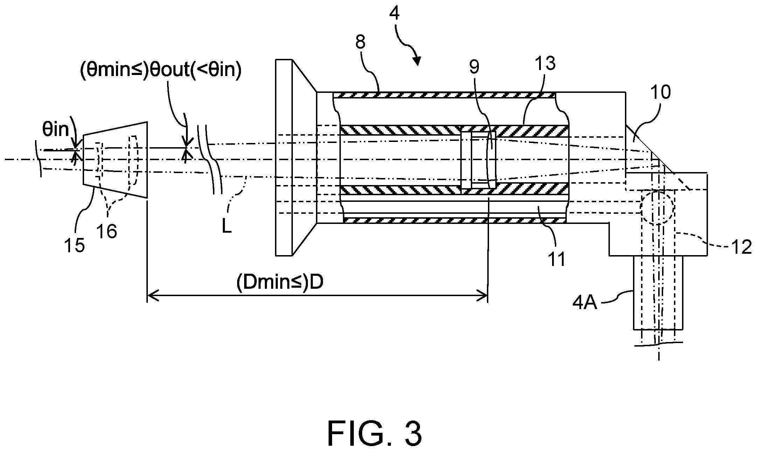

FIG. 1 is a front view of a laser peening processing apparatus according to the first embodiment of the present invention. FIG. 2 is a top view of the laser peening processing apparatus shown in FIG. 1. FIG. 3 is a partial sectional view showing an example of detailed disposition and composition of a beam expander and a nozzle included in the laser peening processing apparatus shown in FIGs. 1 and 2.

A laser peening processing apparatus 1 performs laser peening processing of an object O to be processed by laser peening. Laser peening processing is performed by condensing laser light L on a surface to be processed of the object O so that the surface to be processed is irradiated with the condensed laser light L in the state where the surface to be processed has been covered with liquid, such as pure water or tap water. When the surface to be processed of the object O covered with liquid is irradiated with the condensed laser light L, plasma generated by the irradiation of the laser light L can be closed in the liquid. As a result, the pressure of a shock wave is given to the surface to be processed of the object O. Thereby, compressive stress can be made to remain inside the object O due to plastic deformation of the surface of the object O. Consequently, the fatigue strength and/or the corrosion resistance of the object O can be improved.

The laser peening processing apparatus 1 ejects liquid, such as water, toward the object O to be processed by laser peening while moving the object O. Meanwhile, the laser peening processing apparatus 1 condenses and emits the laser light L on and toward the object O covered with the liquid by entering the laser light L into the liquid to propagate the laser light L through the liquid. For that purpose, the laser peening processing apparatus 1 can be composed of a laser oscillator 2, an optical transmission system 3, a nozzle 4, a liquid supply system 5, and a moving mechanism 6. The laser oscillator 2 and the optical transmission system 3 may be housed in a shield case 7 so that the laser light L may not enter operator's eyes.

The laser oscillator 2 is a device for oscillating the laser light L. In order to fully achieve the effect by laser peening processing, it is important to enlarge the intensity I [W/cm²] of the laser light L enough. The intensity I [W/cm²] of a pulsed laser is expressed by I = E/(St) wherein E [J] represents a pulse energy, S [cm²] represents an area of beam spot irradiated with the pulsed laser, and t [s] represents a pulse width. Therefore, the smaller the pulse width t becomes, the larger the intensity I of the pulsed laser becomes even when the pulse energy E is constant.

For this reason, the laser light L may be femtosecond laser (also called ultra short pulsed laser) whose pulse width t is of a femtosecond order or picosecond laser (also called short pulsed laser) whose pulse width t is of a picosecond order as well as nanosecond laser whose pulse width t is of a nanosecond order. Typical nanosecond laser is YaG laser whose wave length is 1064 nm, 532 nm, or 355 nm.

The optical transmission system 3 is a system for transmitting the laser light L, oscillated by the laser oscillator 2, to the nozzle 4. The marketed optical fiber which can serve as a transmission medium of the laser light L is only the optical fiber which can transmit nanosecond laser whose pulse energy is not more than 50 mJ, picosecond laser whose pulse energy is of a micro joule order, or femtosecond laser whose pulse energy is of a micro joule order.

Accordingly, the optical transmission system 3 can transmit the laser light L, oscillated by the laser oscillator 2, to the nozzle 4 without any optical fiber. In this case, the laser oscillator 2 may be an oscillator which oscillates nanosecond laser whose pulse energy is more than 50 mJ, picosecond laser whose pulse energy is more than 1 mJ, or femtosecond laser whose pulse energy is more than 1 mJ. Thereby, it becomes possible to fully achieve the effect by laser peening processing.

The nozzle 4 is configured to eject liquid, such as water, toward the object O which is a target of laser peening processing, and enter the laser light L into the liquid so that the laser light L propagating in the liquid can be emitted toward the object O. The nozzle 4 can be composed of a casing 8, a condensing lens 9, a prism 10, pipes 11, and a liquid tank 12.

The casing 8 is a cylindrical part for shielding the laser light L before and after the laser light L enters into the liquid. Therefore, the optical path of the laser light L is formed in the casing 8. From the tip 4A of the nozzle 4 integrated with the casing 8, the liquid is ejected toward the object O, and the object O is irradiated with the laser light L, which has entered into the liquid, through the medium consisting of the liquid column toward the object O. Accordingly, straightening vanes or the like for straightening the flow of the liquid may be attached to the tip 4A of the nozzle 4, as necessary.

The condensing lens 9 is a lens for condensing the laser light L on the surface to be processed of the object O so that the focal point of the laser light L may be formed at a position to be processed by laser peening. The characteristic of the condensing lens 9 is determined so that the laser light L having sufficient energy density required for generating laser ablation on the surface to be processed of the object O can be condensed.

The prism 10 is an optical element for changing the travelling direction of the laser light L from the incident direction of the laser light L into the nozzle 4 toward a desired direction, such as the vertically downward direction, by reflecting the laser light L in order to emit the laser light L toward the object O. When the laser oscillator 2 is a high-power oscillator, oscillating the laser light L horizontally leads to stable installation of the laser oscillator 2. For this reason, entering the laser light L into the nozzle 4 in a horizontal direction also leads to the simplification of the optical transmission system 3.

On the other hand, when the irradiation direction of the object O with the laser light L is made vertically downward by bending the optical path of the laser light L by the prism 10, the liquid for propagating the laser light L can be also ejected toward the object O vertically downward. In this case, the ejecting direction of the liquid can be prevented from changing due to gravity. Moreover, the liquid can be ejected utilizing gravity.

In particular, when the travelling direction of the laser light L emitted from the condensing lens 9 is bent by disposing the prism 10 behind the condensing lens 9, i.e., on the optical path of the laser light L between the condensing lens 9 and the object O, it becomes easy to emit the laser light L not only vertically downward but toward a specific direction other than the vertically downward direction by inserting the tip 4A of the nozzle 4 into a narrow part. That is, the length of the tip 4A of the nozzle 4 for emitting the laser light L and ejecting the liquid can be shortened. Accordingly, the nozzle 4 can be disposed relatively to a narrower part, and thereby even the object O having complicated form can be processed by laser peening.

When the prism 10 is disposed in the latter part of the condensing lens 9, the travelling direction of the laser light L, emitted from the condensing lens 9, whose beam diameter reduces gradually is changed at the prism 10. Therefore, the characteristic of the condensing lens 9 is determined so that the focus of the laser light L whose travelling direction has been changed by the prism 10 may be formed on the surface to be processed of the object O.

Each pipe 11 forms a flow path of the liquid. Each pipe 11 forming the flow path of the liquid can be disposed in the casing 8. Specifically, an inlet port of each pipe 11 can be formed on the side face of the casing 8 while an outlet port of each pipe 11 can be disposed on the side where the laser light L is emitted from the prism 10.

In this case, interference between the object O and each pipe 11 can be avoided. As a result, the nozzle 4 can be disposed relatively to a narrower portion, and thereby even the object O having complicated form can be processed by laser peening. As a concrete example, the tip 4A of the nozzle 4 can be inserted inside the hollow object O, such as an internal gear, and an inner surface of the hollow object O can be processed by laser peening with the aim of reducing fretting damage, fretting wear, fretting corrosion, and/or fretting fatigue of the gear or the like.

As a matter of course, when the object O does not seem to interfere with the pipe 11, the flow path of the liquid may be formed with a nylon tube or the like disposed outside the nozzle 4.

The liquid tank 12 is a temporary container of the liquid for entering the laser light L, of which travelling direction has been changed by the prism 10, into the liquid, and ejecting the liquid from the outlet port toward the surface to be processed of the object O in the irradiation direction of the laser light L. The outlet port of the liquid tank 12 serves as not only the port for ejecting the liquid toward the surface to be processed, but the port for emitting the laser light L toward the surface to be processed.

It is important for the liquid, into which the laser light L enters, to prevent air bubbles from arising due to mixing of air or the like from a viewpoint of preventing the laser light L from scattering. Therefore, it is appropriate to seal the liquid tank 12 with the prism 10 so that an air layer may not be formed on the optical path of the laser light L between the prism 10 and the liquid tank 12. In other words, it is appropriate to make consist of air the propagation medium of the laser light L on the incident side of the laser light L into the prism 10 and make consist of the liquid the propagation medium of the laser light L on the emitting side of the laser light L from the prism 10. Therefore, the laser light L enters into the liquid on the emitting side of the laser light L from the prism 10.

In the illustrated example, the outlet ports of the two pipes 11 disposed in parallel to each other in the casing 8 so that the length direction may be horizontal are respectively coupled to the inlet ports of the liquid of the liquid tank 12 on both sides horizontally while the cylindrical outlet port is coupled to the liquid tank 12. The cylindrical outlet port coupled to the liquid tank 12 forms the tip 4A of the nozzle 4.

Accordingly, the liquid can be supplied from the pipes 11 into the optical path of the laser light L formed in the liquid tank 12 while the laser light L can be made incident into the supplied liquid. The liquid into which the laser light L has entered is ejected from the tip 4A of the nozzle 4 toward the object O. Thereby, a liquid column, such as a water column, is formed between the tip 4A of the nozzle 4 and the object O. Therefore, the laser light L emitted from the outlet port of the liquid tank 12 can be made to propagate through the liquid column serving as a medium. Thereby, the surface to be processed of the object O covered with the liquid can be irradiated with the laser light L.

In order to process the surface to be processed of the object O by laser peening, it is necessary to emit the laser light L having an appropriate fluence F [J/cm²] on the surface to be processed so that plasma having required energy may be generated, and thereby residual stress required for improving fatigue strength and/or corrosion resistance may be given to the surface to be processed. The fluence F [J/cm²] of the laser light L is the value derived by dividing the pulse energy E [J] by the area S [cm²], i.e., F = E/S. As mentioned above, the intensity I [W/cm²] of the laser light L is the value derived by dividing the pulse energy E [J] by the pulse width t [s] and the area S [cm²]. Therefore, the intensity I [W/cm²] of the laser light L is equivalent to the value derived by dividing the fluence F [J/cm²] by the pulse width t [s].

When the laser oscillator 2 is a typical oscillator like a YAG laser oscillator, the pulse width t of the laser light L is settled in general depending on the specification of the laser oscillator 2. Therefore, it is the pulse energy E of the laser light L and the area S of the beam spot that a user of the laser peening processing apparatus 1 can adjust.

That is, the larger the pulse energy E of the laser light L is made, the larger the intensity I and the fluence F of the laser light L used for laser peening processing become. Moreover, the smaller the area S of the beam spot of the laser light L is made, the larger the intensity I and the fluence F of the laser light L used for laser peening processing become. From a viewpoint of raising the energy efficiency of the laser light L, it is desirable to make as small as possible the area S of the beam spot of the laser light L condensed and emitted on the surface to be processed of the object O. That is, it is desirable to make as small as possible the error between the surface to be processed and the focal point.

In order to allow laser peening processing of a narrow part, it is desirable to shorten the distance between the surface to be processed of the object O and the tip 4A of the nozzle 4 as much as possible. For that purpose, it is desirable to shorten the distance from the tip 4A of the nozzle 4 to the focal point of the laser light L. In order to shorten the distance from the tip 4A of the nozzle 4 to the focal point of the laser light L, it is necessary to make the beam diameter as small as possible by converging the laser light L entering into the condensing lens 9 as well as to use the condensing lens 9 whose focal distance is short. In other words, the area S of the beam spot of the laser light L can be made small in a shorter distance from the tip 4A of the nozzle 4 as the beam diameter of the laser light L entering into the condensing lens 9 is made smaller, which is advantageous for laser peening processing of a narrow part.

Nevertheless, the laser light L oscillated from the laser oscillator 2 is certainly spreading light whose beam diameter gradually expands, and therefore the larger the beam diameter of the laser light L becomes, the farther the laser light L is from the laser oscillator 2. The spread angle of the laser light L oscillated from the typical laser oscillator 2 is 0.5 [mrad] to 10 [mrad]. For this reason, it is desired to shorten the optical distance from the laser oscillator 2 to the condensing lens 9 as much as possible in order to make small the beam diameter of the laser light L entering into the condensing lens 9. Meanwhile, it is necessary to dispose optical elements and optical devices including a shutter and an attenuator between the laser oscillator 2 and the condensing lens 9. In addition, if the distance from the laser oscillator 2 to the condensing lens 9 is shortened too much, the length of the nozzle 4 also becomes short, and thereby laser peening processing of a narrow part may become difficult due to interference between the object O and the nozzle 4.

For this reason, the laser oscillator 2 and the condensing lens 9 have to be disposed at a required interval. As a result, the beam diameter of the laser light L oscillated from the laser oscillator 2 may become too large to enter into the condensing lens 9. Accordingly, the optical transmission system 3 can be provided with not only mirrors 14, necessary for forming the optical path of the laser light L in the air, but an beam expander 15, for converging the laser light L oscillated from the laser oscillator 2 to enter the laser light L into the condensing lens 9, regardless of whether the beam diameter of the laser light L oscillated from the laser oscillator 2 becomes too large to enter into the condensing lens 9.

That is, it is necessary to decrease the magnifying ratio of the beam diameter of the laser light L, entering into the condensing lens 9, by a focusing lens 16 of the beam expander 15 so that the beam diameter may not become too large to enter into the condensing lens 9 at least. In addition, it is desirable to make as small as possible the magnifying ratio of the beam diameter of the laser light L, entering into the condensing lens 9, by the beam expander 15 so that the beam diameter and the area S of the laser light L may become small in a short distance as much as possible from the tip 4A of the nozzle 4, from a viewpoint of allowing easy laser peening processing of a narrow part with the laser light L having the suitable intensity I and fluence F.

Meanwhile, the prism 10 whose allowable fluence of the laser light L is extraordinarily small compared with that of a mirror is disposed at the latter part of the condensing lens 9 at which the laser light L converges. For this reason, if the laser light L having the excess fluence F enters into the prism 10 for a long time, the prism 10 may be damaged. Therefore, it is important to restrict the rate of increase in the fluence F of the laser light L emitted from the condensing lens 9 so that the fluence F of the laser light L may not become an excess value at the prism 10 even after the fluence F increases due to decrease of the area S.

Specifically, it is important to make not less than lower limits the areas S of the laser light L entering into the prism 10 and the condensing lens 9 respectively since too small area S of the laser light L entering into the prism 10 raises the risk of damage to the prism 10. For that purpose, it is important not to decrease too much the magnifying ratio of the beam diameter of the laser light L, entering into the condensing lens 9, by the beam expander 15.

That is, the first requirement that the magnifying ratio of the beam diameter of the laser light L entering into the condensing lens 9 should be made small so that the laser light L having the fluence F required for laser peening processing may be emitted on the surface to be processed of the object O at a short distance and the second requirement that the magnifying ratio of the beam diameter of the laser light L entering into the condensing lens 9 should not be made too small so that the prism 10 may not be damaged due to incidence of the laser light L having the excess fluence F into the prism 10 have to be satisfied simultaneously.

Accordingly, the magnifying ratio of the beam diameter of the laser light L which enters into the condensing lens 9 can be finely tuned by the beam expander 15 so that the beam diameter of the laser light L emitted on the surface to be processed may become a beam diameter required for laser peening processing of the surface to be processed while the prism 10 may not be damaged due to the excess beam diameter of the incident laser light L into the prism 10. In this case, the magnifying ratio of the beam diameter of the laser light L by the beam expander 15 is restricted to the range less than the magnifying ratio of the beam diameter of the laser light L oscillated from the laser oscillator 2 and not less than the lower limit determined so that the prism 10 may not be damaged by the laser light L, as mentioned above.

As for the beam expander 15, a fixed magnification type with a constant magnifying ratio of the beam diameter of the laser light L and a variable magnification type allowing adjustment of the magnifying ratio of the beam diameter of the laser light L are marketed. Accordingly, using a variable magnification type of beam expander allows easy fine adjustment of the magnifying ratio of the beam diameter of the laser light L which enters into the condensing lens 9. That is, the fluence F of the laser light L with which the surface to be processed of the object O is irradiated and the fluence F of the laser light L which passes through the prism 10 can be finely tuned to be balanced by the beam expander 15.

Although there are some types of the beam expander 15 including the Galileo type and Kepler type, any type may be used as long as the beam expander 15 is applicable to the energy of the laser light L. In case of the Galileo type, the focusing lens 16 is composed of a convex lens and a concave lens combined to each other as illustrated. Meanwhile, in case of the Kepler type, the focusing lens 16 is composed of two combined convex lenses, and a pinhole is disposed as a spatial filter.

An appropriate range, including the upper and lower limit values, of the magnifying ratio of the beam diameter of the laser light L emitted from the beam expander 15 can be determined by an actual examination or simulation. Simulation requires complicated calculation using many parameters including the upper limit of the intensity I of the laser light L entering into the prism 10, the distance between the condensing lens 9 and the beam expander 15, the magnifying ratio of the beam diameter of the laser light L at the beam expander 15, and the intensity I of the laser light L oscillated from the laser oscillator 2. Meanwhile, using a variable-type of the beam expander 15, from which the laser light L can be emitted with varying the magnifying ratio, makes examination easy. Therefore, it is realistic to determine, by examination, an appropriate range for the magnifying ratio of the beam diameter of the laser light L in the beam expander 15.

Accordingly, the object O, the prism 10, the condensing lens 9, and the beam expander 15 have been actually disposed, and examination has been performed with changing the magnifying ratio of the laser light L emitted from the beam expander 15 within a range where the spreading angle θout of the laser light L emitted from the beam expander 15 becomes smaller than the spreading angle θin of the laser light L oscillated from the laser oscillator 2 wherein the spreading angle is expressed as an angle between the optical axis of the laser light L and the beam side face as illustrated in FIG. 3. As a result, it has been confirmed that the object O can be continuously processed by laser peening with suitable energy for a long time without damaging the prism 10 so long as the lower limit of the magnifying ratio of the beam diameter of the laser light L emitted from the beam expander 15 expressed by the lower limit θmin of the spreading angle θout of the laser light L was set up appropriately according to the irradiation conditions of the laser light L including the optical characteristics of the prism 10, such as the allowable fluence.

Moreover, it has also been confirmed by examination conducted with actually disposing the object O, the prism 10, the condensing lens 9, and the beam expander 15 that the prism 10 might be damaged even when the average intensity on the cross section of the laser light L entering into the prism 10 was within an allowable range of the prism 10 since the intensity I of the laser light L was not actually constant on the cross section. Therefore, it is appropriate to determine the allowable range of the prism 10 so that the allowable range might cover not the average intensity on the cross section of the laser light L but the maximum intensity on the cross section.

Note that, the area S and the fluence F of the laser light L entering into the prism 10 can be changed not only by adjustment of the area S of the laser light L entering into the condensing lens 9 but by adjustment of the distance between the condensing lens 9 and the prism 10. In order to finely adjust the distance between the condensing lens 9 and the prism 10, a complicated mechanism is required since the liquid tank 12 is sealed by the prism 10 while the condensing lens 9 is fixed to a lens case 13.

Moreover, if a mechanism for adjusting the distance between the condensing lens 9 and the prism 10 is disposed, the size of the nozzle 4 becomes large, and thereby laser peening processing of a narrow part may become impossible. Due to such a situation, it is realistic to optimize the area S and the fluence F of the laser light L entering into the prism 10 by finely tuning, by the beam expander 15, the area S of the laser light L entering into the condensing lens 9, from a viewpoint of allowing laser peening processing of a narrow part.

The area S of the laser light L which enters into the condensing lens 9 also changes depending on the distance D between the beam expander 15 and the condensing lens 9 as well as the magnifying ratio of the beam diameter by the beam expander 15. Specifically, assuming that the distance between the laser oscillator 2 and the beam expander 15 is constant, the shorter the distance D between the beam expander 15 and the condensing lens 9 is, the more the fluence F of the laser light L entering into the prism 10 increases since the areas S of the laser light L entering into the condensing lens 9 and the prism 10 each becomes small. On the contrary, assuming that the distance between the laser oscillator 2 and the beam expander 15 is constant, the longer the distance D between the beam expander 15 and the condensing lens 9 is, the more the fluence F of the laser light L entering into the prism 10 decreases since the areas S of the laser light L entering into the condensing lens 9 and the prism 10 each becomes large.

Therefore, in order to prevent the prism 10 from being damaged, it is important to restrict the distance D between the beam expander 15 and the condensing lens 9 so as to keep the distance D not less than the lower limit Dmin determined so that the prism 10 may not be damaged with the laser light L according to the characteristic of the laser oscillator 2. That is, when the distance between the laser oscillator 2 and the beam expander 15 is made constant, disposing the beam expander 15 away from the condensing lens 9 by the distance D not less than the lower limit Dmin makes it possible to avoid damage to the prism 10.

The distance D between the beam expander 15 and the condensing lens 9, and/or the distance between the laser oscillator 2 and the beam expander 15 may be made finely adjustable. The distance D between the condensing lens 9 and the optical transmission system 3 in which the beam expander 15 is disposed can be finely adjusted by changing the length of the casing 8 of the nozzle 4, or disposing a shim between the nozzle 4 and the optical transmission system 3, for example. In addition, when the beam expander 15 is disposed in the optical transmission system 3 with a slider, not only the distance D between the beam expander 15 and the condensing lens 9 but the distance between the laser oscillator 2 and the beam expander 15 can be finely adjusted.

As described above, the object O can be processed by laser peening by irradiating positions to be processed by laser peening, on the surface of the object O, with the laser light L, of which the area S of beam spot, the intensity I and the fluence F have been adjusted according to the relative position of the surface to be processed of the object O, while ejecting the liquid on the positions to be processed. Since the positions to be processed by laser peening belong to a point group in a two-dimensional area corresponding to the surface to be processed of the object O, the nozzle 4 has to be moved relatively to the object O.

The moving mechanism 6 moves the object O relatively to the nozzle 4 so that each position to be processed by laser peening may be irradiated with the laser light L. The moving mechanism 6 can be composed of desired devices, such as a movable table 19 to which a container 18 having a drain port 17 of the liquid has been attached, since the liquid is ejected toward the surface to be processed of the object O during laser peening processing.

### (Operation and Action)

Next, a method of laser peening processing using the laser peening processing apparatus 1 will be described.

When the object O is to be processed by laser peening with the laser peening processing apparatus 1, the object O is fixed to an attachment jig or the like in the container 18 attached to the movable table 19 of the moving mechanism 6 as exemplified by FIG. 1. The object O fixed to the movable table 19 of the moving mechanism 6 is positioned so that the focal point of the laser light L emitted from the nozzle 4 may lie on a position to be processed by laser peening on the surface of the object O.

Next, the liquid, such as pure water previously generated by a deionizer, is supplied from the liquid supply system 5 to the nozzle 4. The supplied liquid flows into the pipes 11 disposed in the nozzle 4 as exemplified by FIGs. 1 to 3, and then the liquid flows into the liquid tank 12 through the pipes 11. The liquid which has flown into the liquid tank 12 is ejected, toward the object O to be processed by laser peening, from the tip 4A of the nozzle 4 which forms the outlet of the liquid tank 12. As a result, a liquid column, such as a water column, is formed between the outlet at the tip 4A of the nozzle 4 and the surface of the object O. The formed liquid column can be used as a medium for propagating the laser light L.

On the other hand, the laser light L is led into the nozzle 4 by the laser oscillator 2 and the optical transmission system 3. More specifically, the laser light L oscillated from the laser oscillator 2 is reflected on the mirrors 14 included in the optical transmission system 3 to propagate through the air, and then enter into the beam expander 15 as exemplified by FIG. 1 and FIG. 2.

Even though the laser light L is oscillated as a collimated beam from the laser oscillator 2, the oscillated laser light L actually becomes spreading light whose beam diameter spreads gradually. Therefore, the laser light L which enters into the beam expander 15 becomes spreading light whose beam diameter expands at the spreading angle θin as exemplified by FIG. 3.

The beam expander 15 finely adjusts the magnifying ratio of the beam diameter of the laser light L so that the laser light L emitted from the beam expander 15 and then condensed by the condensing lens 9 may have the appropriate area S, intensity I, and fluence F for irradiating the surface to be processed of the object O while the laser light L passing through the prism 10 disposed behind the condensing lens 9 may have the area S, intensity I, and fluence F of the extent that the prism 10 is not damaged.

More specifically, the magnifying ratio of the beam diameter of the laser light L emitted from the beam expander 15 is finely adjusted so that the spreading angle θout of the laser light L emitted from the beam expander 15 may becomes less than the spreading angle θin of the laser light L entering into the beam expander 15 and not less than the lower limit θmin determined so as to prevent the laser light L having an excess intensity I and fluence F from entering into the prism 10, as exemplified by FIG. 3.

The laser light L which has been emitted from the beam expander 15 enters into the condensing lens 9 in the nozzle 4. The laser light which has passed through the condensing lens 9 enters into the prism 10 while converging. The laser light L which has entered into the prism 10 is emitted from the prism 13 in the state that the travelling direction has turned into a direction toward the surface to be processed of the object O. The laser light L which has been emitted from the prism 13 enters into the liquid in the liquid tank 12 while converging, and then propagates through the liquid column from the outlet of the liquid tank 12. Thereby, the surface to be processed of the object O is irradiated with the laser light L.

When the surface to be processed of the object O covered with the liquid has been irradiated with the laser light L, plasma is generated. The generated plasma is closed in the liquid which has been ejected from the nozzle 4. As a result, the pressure of a shock wave is given to the surface to be processed of the object O, and thereby the surface can be processed by laser peening.

Such laser peening processing can be continued while moving the object O by the moving mechanism 6. That is, laser peening processing can be continued while changing a processing point every moment by moving the object O by the movable table 19 of the moving mechanism 6. When all the points of the object O have been processed by laser peening with the laser peening processing apparatus 1, a product or a semi-product can be produced.

### (Effect)

As described above, the laser peening processing apparatus 1 and the method of laser peening processing allow the laser light L having an appropriate magnifying ratio of the beam diameter to enter into the condensing lens 9 by the beam expander 15 so that even the object O disposed in a short distance can be irradiated with the laser light L having a sufficient intensity I and fluence F while preventing the prism 10 from being damaged, in case of laser peening processing in which the optical path of the laser light L emitted from the condensing lens 9 is bent by the prism 10 for irradiating the object O with the laser light L.

Therefore, according to the laser peening processing apparatus 1 and the method of laser peening processing, the object O disposed in a short distance can be irradiated with the laser light L having a sufficient intensity I and fluence F while preventing the prism 10 from being damaged. Specifically, disposing the prism 10 makes it possible to reduce the size of the nozzle 4 down to one allowing local laser peening processing of a narrow part. Meanwhile, since the beam diameter of the laser light L entering into the condensing lens 9 can be made small by the beam expander 15, the irradiation distance with the laser light L from the condensing lens 9 to the object O can be shortened.

In addition, the magnifying ratio of the beam diameter of the laser light L, which enters into the condensing lens 9, is adjusted so that the prism 10, disposed for making the size and form of the tip 4A of the nozzle 4 applicable for laser peening processing of a narrow part, may be hard to be damaged even by long time irradiation with the laser light L. Consequently, laser peening processing can be performed continuously for a longer time than conventionally. As a concrete example, against laser peening processing of a typical aircraft part which requires laser light irradiation for about 16 to 70 hours, it becomes possible to continuously emit laser light over 12 hours although a conventional method requires to intermittently emit laser light so that continuous irradiation time with the laser light may be within 12 hours in order to prevent a prism from being damaged.

### (Second Embodiment)

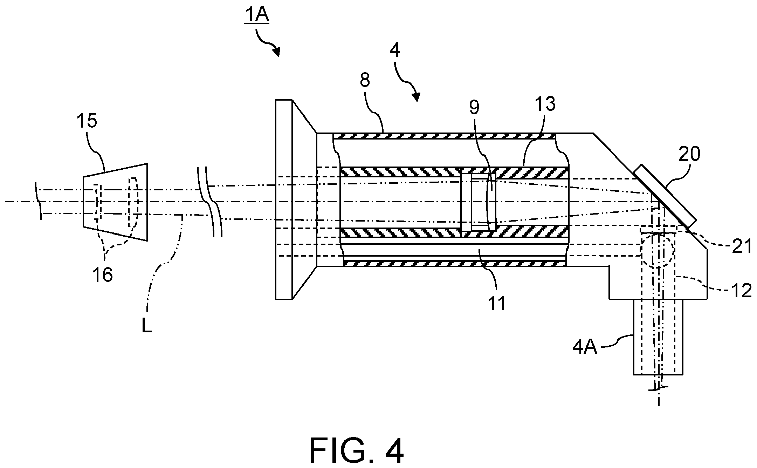

FIG. 4 is a partial sectional view showing an example of detailed disposition and composition of a beam expander and a nozzle included in a laser peening processing apparatus according to the second embodiment of the present invention.

A laser peening processing apparatus 1A in the second embodiment shown in FIG. 4 is different from the laser peening processing apparatus 1 in the first embodiment in the configuration that a total reflection mirror 20 is disposed as the optical element for changing the travelling direction of the laser light L emitted from the condensing lens 9, instead of the prism 10, while the liquid tank 12 is sealed by an incident window 21. Other configurations and actions of the laser peening processing apparatus 1A in the second embodiment are not substantially different from those of the laser peening processing apparatus 1 in the first embodiment. Therefore only an example of detailed placement and detailed structure of the beam expander 15 and the nozzle 4 are illustrated, and the same signs are attached to the same elements and the corresponding elements while explanation thereof is omitted.

The optical element for changing the travelling direction of the laser light L condensed by the condensing lens 9 may be the total reflection mirror 20 as well as the prism 10. Accordingly, the total reflection mirror 20 may be disposed behind the condensing lens 9 instead of the prism 10.

The allowable fluence of the total reflection mirror 20 is 10 to 20 times of that of the prism 10. Therefore, only replacing the prism 10 with the total reflection mirror 20 can achieve to avoid damage, i.e., the total reflection mirror 20 is not damaged by the laser light L as long as the fluence F of the laser light L required of laser peening processing is the same. In particular, the total reflection mirror 20 may be a dielectric multilayer film planar mirror, which is glass, such as synthetic quartz, whose surface is coated with a dielectric multilayer film. In this case, the risk of damage can be reduced even when the laser light L having a larger fluence F is reflected.

Conversely, when the fluence F of the laser light L required for laser peening processing is so large that the total reflection mirror 20 may be damaged by the laser light L, the magnifying ratio of the beam diameter of the laser light L entering into the condensing lens 9 may be restricted by the beam expander 15 similarly to the first embodiment so that the fluence F of the laser light L entering into the total reflection mirror 20 may become smaller than the allowable fluence of the total reflection mirror 20.

When the total reflection mirror 20 reflects the laser light L emitted from the condensing lens 9 to bend the travelling direction of the laser light L, the laser light L propagates through the air also on the emission side of the total reflection mirror 20. In other words, the liquid tank 12 cannot be sealed by the total reflection mirror 20.

Accordingly, it is appropriate that the incident window 21 which allows the laser light L to enter into the liquid tank 12 while sealing the liquid tank 12 is attached to the liquid tank 12. Thereby, a reverse flow of the liquid filling the liquid tank 12 and mixing of the air into the liquid can be prevented. In this case, the laser light L emitted from the condensing lens 9 is reflected on the total reflection mirror 20, and then passes through the incident window 21 while converging. Therefore, it is important to prevent the laser light L from being reflected on the incident window 21. Accordingly, it is desirable that a window plate with an antireflection film on each face, consisting of glass, such as synthetic quartz, whose incident face and emission face are each coated with an antireflection film is used as the incident window 21.

According to the above-described second embodiment, it becomes possible to process a narrow part by laser peening with long time continuous irradiation with the laser light L using the small nozzle 4 similarly to the first embodiment. In addition, according to the second embodiment, the possible case where the magnifying ratio of the beam diameter of the laser light L entering into the condensing lens 9 has to be finely adjusted with the beam expander 15 in order to prevent an optical element disposed behind the condensing lens 9 from being damaged can be limit to a case where the fluence F of the laser light L required for laser peening processing is especially large. Meanwhile, the first embodiment using the prism 10 allows reduction in not only the number of the optical elements disposed behind the condensing lens 9, but energy loss due to unnecessary reflection of the laser light L, compared with the second embodiment.

## Claims

1. A laser peening processing apparatus comprising:
a laser oscillator that oscillates laser light;
a condensing lens that condenses the laser light on a surface to be processed of an object;
an optical element that changes a travelling direction of the laser light emitted from the condensing lens;
a liquid tank that inputs the laser light, of which the travelling direction has been changed by the optical element, into liquid, the liquid tank emitting and ejecting the input laser light and the liquid from an exit to the surface to be processed; and
a beam expander that adjusts a magnifying ratio of a beam diameter of the laser light entering into the condensing lens, the adjusting the magnifying ratio making a beam diameter of the laser light irradiating the surface to be processed become a diameter required for laser peening processing of the surface to be processed, the adjusting the magnifying ratio also preventing the laser light, having an excess beam diameter causing damage of the optical element, from entering into the optical element.

2. The laser peening processing apparatus according to claim 1,
wherein the magnifying ratio of the beam diameter by the beam expander is restricted within a range less than a magnifying ratio of a beam diameter of the laser light oscillated from the laser oscillator and not less than a lower limit determined for preventing the optical element from being damaged by the laser light.

3. A laser peening processing apparatus comprising:
a laser oscillator that oscillates laser light;
a condensing lens that condenses the laser light on a surface to be processed of an object;
an optical element that changes a travelling direction of the laser light emitted from the condensing lens; and
a liquid tank that inputs the laser light, of which the travelling direction has been changed by the optical element, into liquid, the liquid tank emitting and ejecting the input laser light and the liquid from an exit to the surface to be processed,
wherein a total reflection mirror is disposed as the optical element, and
the liquid tank has an incident window plate for entering the laser light into the liquid tank while sealing the liquid tank, each of an incident face and an emission face of the incident window plate being coated with antireflection film.

4. A method of laser peening processing comprising:
producing a product or a semi-product by the laser peening processing of the object using the laser peening processing apparatus according to any one of claims 1 to 3.

5. A method of laser peening processing comprising:
producing a product or a semi-product by the laser peening processing of an object using a laser peening processing apparatus,
the laser peening processing apparatus including:
a laser oscillator that oscillates laser light;
a condensing lens that condenses the laser light on a surface to be processed of the object;
an optical element that changes a travelling direction of the laser light emitted from the condensing lens; and
a liquid tank that inputs the laser light, of which the travelling direction has been changed by the optical element, into liquid, the liquid tank emitting and ejecting the input laser light and the liquid from an exit to the surface to be processed,
wherein a magnifying ratio of a beam diameter of the laser light entering into the condensing lens is adjusted by a beam expander, the adjusting the magnifying ratio making a beam diameter of the laser light irradiating the surface to be processed become a diameter required for laser peening processing of the surface to be processed, the adjusting the magnifying ratio also preventing the laser light, having an excess beam diameter causing damage of the optical element, from entering into the optical element.

6. The method according to claim 5,
wherein the magnifying ratio of the beam diameter by the beam expander is restricted within a range less than a magnifying ratio of a beam diameter of the laser light oscillated from the laser oscillator and not less than a lower limit determined for preventing the optical element from being damaged by the laser light.

7. The method according to claim 5 or 6,
wherein a total reflection mirror is disposed as the optical element, and
the liquid tank has an incident window plate for entering the laser light into the liquid tank while sealing the liquid tank, each of an incident face and an emission face of the incident window plate being coated with antireflection film.
